(19) **Europäisches Patentamt**

**European Patent Office**

**Office européen des brevets**

(11) **EP 1 619 466 A1**

(12) **EUROPEAN PATENT APPLICATION**

(43) Date of publication:
**25.01.2006 Bulletin 2006/04**

(51) Int Cl.:
**G01B 11/06** (2006.01)

(21) Application number: **05106648.8**

(22) Date of filing: **20.07.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **21.07.2004 IT MI20041468**

(71) Applicant: **Deponte, Edoardo**
**31054 Possagno (IT)**

(72) Inventor: **Deponte, Edoardo**
**31054 Possagno (IT)**

(74) Representative: **Borsano, Corrado**
**Notarbartolo & Gervasi S.p.A.**
**Corso di Porta Vittoria, 9**
**20122 Milano (IT)**

(54) **Procedure and a device for measuring the thickness of thermoplastic films with differential backscattering**

(57) A system for measuring the thickness of thermoplastic films which exploits the principle of optical differential backscattering is disclosed. An incident radiation beam is scattered by the film being examined in all directions, and the backscattered part of the beam is detected and related with the thickness and size of the surface of the film. In particular, the part of light flow scattered within a defined angle with respect to the perpendicular to the measurement plane is focused on a detector and measured.

**FIG. 4**

EP 1 619 466 A1

## Description

The present invention relates to a procedure and a device for measuring the thickness of thermoplastic films with differential backscattering.

Measurement of the thickness of thermoplastic films is, for example, used in the production process thereof, to control uniformity of the thickness. Production normally takes place by extrusion of the molten plastic material, from a circular or flat die, which is then drawn to obtain a suitable thickness, i.e. from a circular die a thermoplastic film with a laterally closed form, i.e. tubular (so called "bubble") is obtained, which will then be subjected to further processing operations. The thickness is normally measured on the tubular film while still hot, at a temperature which can, for example, range from 60 to 120°C.

Measurement systems applied to measurement of the thickness of thermoplastic films are known in the art, the most widespread of which are divided into the following types:

- absorption (or transmission) systems which require interposing of the film being measured between a source and a detector, and which are based on measurement of the portion of radiation absorbed by the film; these can use radioisotopes (beta gauge) or an infrared radiation source;
- reflection systems which are based on measurement of the part of radiation reflected; these include radioisotope systems (back scattering beta gauge) or optical systems which reflect infrared radiation;
- capacitive effect measurement systems with the plates aligned on the same plane and which require contact with the film being measured which is placed over the plates.

Systems based on the use of radioisotopes are used less and less, due to their cost and to the problem of the emission of radiation at potentially dangerous wavelengths, which require high costs to implement procedures to control and limit absorption by personnel operating them.

Moreover, absorption systems are difficult, if not impossible, to apply in systems which produce tubular thermoplastic films, due to the difficulty of inserting one of the two parts (usually the emitting part) inside the closed form.

Optical reflection systems are difficult to use, as they are influenced by the variation in the optical characteristics of the film (especially reflecting power and refraction index), which change through time during processing, also as a function of the temperature of the film.

Systems with capacitive effect require contact with the film and are influenced by the dielectric constant of the material and by the variation in density.

Moreover, in general the problems to solve are those related to the use of nonionizing radiations which are therefore safer, and to preventing the film from coming into physical contact with the measuring device, as it moves with respect to the measurement system and can "stick", or be lacerated or scratched, leaving indelible marks.

Therefore the purpose of the present invention is to solve the aforesaid problems and to indicate an innovative system for measuring the thickness of thermoplastic films, which exploits the principle of optical differential backscattering, on the basis of which a beam of incident radiation is scattered by the film being examined in all directions, and the backscattered part of the beam is detected and related with the thickness and size of the surface of the film.

The part of light flow scattered in a defined angle with respect to the perpendicular to the plane of measurement is focused on a detector and measured.

It is a subject of the present invention a procedure for measuring the thickness of a thermoplastic film, characterized in that it comprises the steps of: detecting radiation backscattered by the plastic film; measuring said thickness on the basis of the value of said backscattered radiation measured.

It is a further subject of the present invention a device for measuring the thickness of a thermoplastic film, characterized in that it comprises: means to detect a radiation backscattered by the plastic film; means to measure said thickness on the basis of the measured value of said backscattered radiation.

A particular subject of the present invention is a procedure and a device for measuring the thickness of thermoplastic films with differential backscattering, as better described in the claims, which form an integral part of the present description.

Purposes and advantages of the present invention shall be apparent from the detailed description hereunder of an embodiment (and variants) thereof and from the accompanying drawings, provided purely by way of non-limiting examples, wherein:

Figure 1 shows a general layout of the optical beams which are created following illumination of a film;
Figure 2 shows the typical trend of the transmittance factor of a thermoplastic material as a function of the wavelength;
Figure 3 shows a schematic diagram of the time sequence of light emission and measurement used in accordance with the present invention;
Figure 4 shows a schematic diagram of the type of device used in accordance with the present invention;

Figures 5 and 6 show schematic diagrams of variants of embodiment of the device forming the object of the invention;

The same numbers and the same letters of reference in the figures identify the same elements or quantities.

The operating principle of the measurement system is described hereunder.

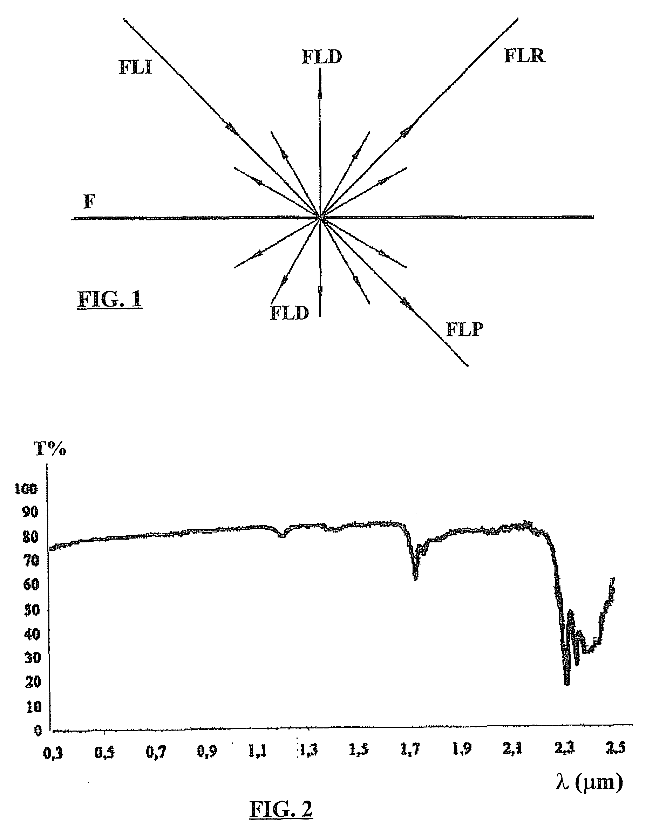

As can be seen in Figure 1, on the basis of general principles of optics, projecting an incident light beam FLI on a film F with a certain inclination with respect to the normal, a part FLR of the light flow is reflected with an angle equal and opposite to the incident angle; a part FLP passes through the film and exits therefrom with the same inclination as the incident light, another part is absorbed and, finally, a significant part FLD is scattered in all directions (shorter lines).

Figure 2 shows a typical curve of the transmittance factor percentage T% of a thermoplastic material, such as polyethylene, in the visible and near infrared wavelength range. It can be seen that the transmission curve has absorption peaks above a certain value (approximately 2.3 $\mu$m in the non-limiting example shown here). Wavelengths of over 3 $\mu$m are normally used in prior art optical devices to measure the thickness of the film due to the presence of absorption peaks, which moreover are characteristic for each material or groups thereof.

Instead, for lower wavelength values, in the near infrared and visible range, it can be seen that the trend is regular, without relevant peaks, and with slight decay towards the lower values. In particular, this decaying characteristic of the curve is used here to measure the thickness. It has been found that the quantity of scattered radiation flux at these wavelength values is in direct relation to the quantity absorbed, in the sense that an increase in scattering corresponds to an increase in absorption. Therefore, as absorption is in relation to the wavelength and to the thickness of the material, the various absorption values at different wavelength values can be exploited, as shown in the graph, to perform differential scattering measurements, thereby obtaining measurement of the thickness of the film.

It is also relevant to note that a thermoplastic film generally appears transparent to the human eye, whilst in actual fact it is translucent. This is due to the optical illusion caused by the sensitivity curve of the human eye, which is actually not linear, but has a peak at midband (wavelength near green) and high decay levels at the edges. The optical illusion of transparency has contributed towards forming the technical prejudice that the spectrum of the visible wavelengths and those immediately adjacent could not be used for the purpose.

Moreover, the scattered and not the reflected component is used, as it has also been found that the latter is greatly influenced by the variation in the surface characteristics of the material depending on the instantaneous production conditions, especially the lucidity (or opaqueness) of the surface, while the scattered component is more directly in relation with the thickness of the film.

The preferred band comprises wavelengths ranging from 0.4 to 1.6 $\mu$m, i.e. in the visible and near infrared range. It must also be noted that at these wavelength values the influence of the variations in temperature of the film during measurement is irrelevant, while it instead becomes relevant at higher wavelengths, at which known systems operate.

Moreover, a measurement of the differential type allows elimination of errors caused by vibrations or irregular movements of the material which cause a modification of the optical path length and therefore a variation in the useful optical flow, according to the law of inverse proportionality to the square of the distance.

In particular, the system uses two light sources at different wavelengths, preferably chosen in the visible and near infrared range, with a sufficiently narrow and adequately powerful emission band, the light beams of which, influenced by suitable optics, with a certain angle of incidence, are made to converge sequentially on the film being measured. A part of the light flow is reflected with an angle equal and opposite to the incident angle; another part passes through the film; another part is absorbed and, finally, a significant part is scattered in all directions and is used for measurement.

Two sequential signals are obtained at the detector, correlated with each other and to the amount of scattering and consequently of the thickness of the film.

Measurements are made using known values present in a suitable database, in which the calculation constants are stored for each type of material. The measurement system can create the database in an initial learning phase with reference measurements, or said parameters can be prestored.

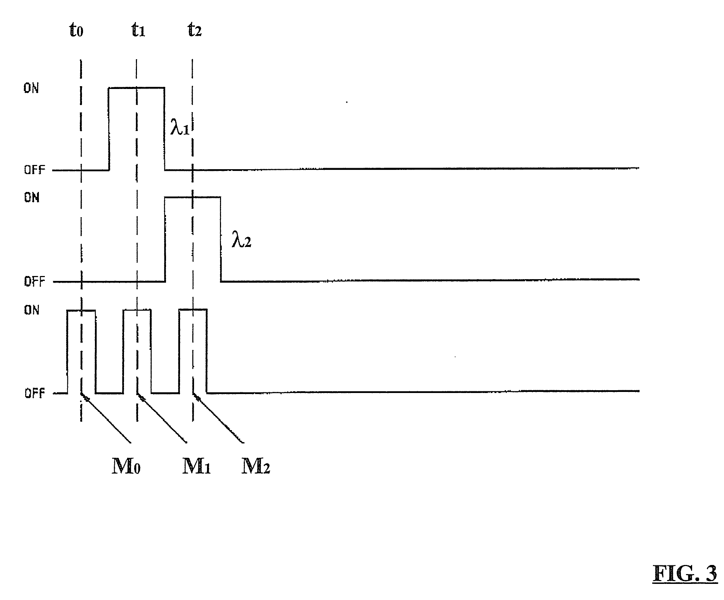

Figure 3 shows a functional sequence of the light emission and detection cycles, where:

- at the time $t_0$ a measurement $M_0$ of the ambient emissivity is performed, used as relative zero for measurement of the scattered emission;
- at the time $t_1$ emission of a light pulse at the first wavelength equal to $\lambda_1$ and simultaneous measurement $M_1$ of the consequent portion backscattered from the film take place;
- at the time $t_2$ emission of a light pulse at the second wavelength equal to $\lambda_2$ and simultaneous measurement $M_2$ of the consequent portion backscattered from the film take place.

Measurement cycles are performed at a certain time distance. In a non-limiting example, measurements of ambient emissivity, and of pulses of the first and second wavelength $\lambda_1$ and $\lambda_2$ each last for 10 $\mu$s. In total, a measurement is performed in 30 $\mu$s, while the distance between two consecutive measurements is of 1 ms.

The basic formula used to measure the thickness *Sp* of the film, is a proportion between the differential value of the measurements at the wavelengths $\lambda_1$ and $\lambda_2$ with respect to the measurement at the wavelength $\lambda_1$ compared with a known value $K_1$ from the database, all scaled with a second value $K_2$ again taken from the database.

$$Sp\ (\mu m) = [\ (M\lambda_1 - M\lambda_2)\ /\ (M\lambda_1\ /\ K_1)\ ]\ *\ K_2$$

Where typically:

$M\lambda_1 = M_1 - M_0$ = scattering value at $\lambda_1$
$M\lambda_2 = M_2 - M_0$ = scattering value at $\lambda_2$
$K_1$ = scattering constant [ instrumental constant ]
$K_2$ = conversion constant mV$\rightarrow\mu$m between a voltage measurement and a dimensional measurement [instrumental constant]

The measurement process is fast so that the three consecutive measurements can be considered simultaneous with respect to the speed at which the film moves with respect to the measuring device.

A mean value of the measurements is then determined by integration over a certain period of time (i.e. 20 measurements for a total time of 0.02 seconds).

Measurement of the ambient emissivity is repeated each time, thereby avoiding interferences due to instantaneous variations of the ambient light.

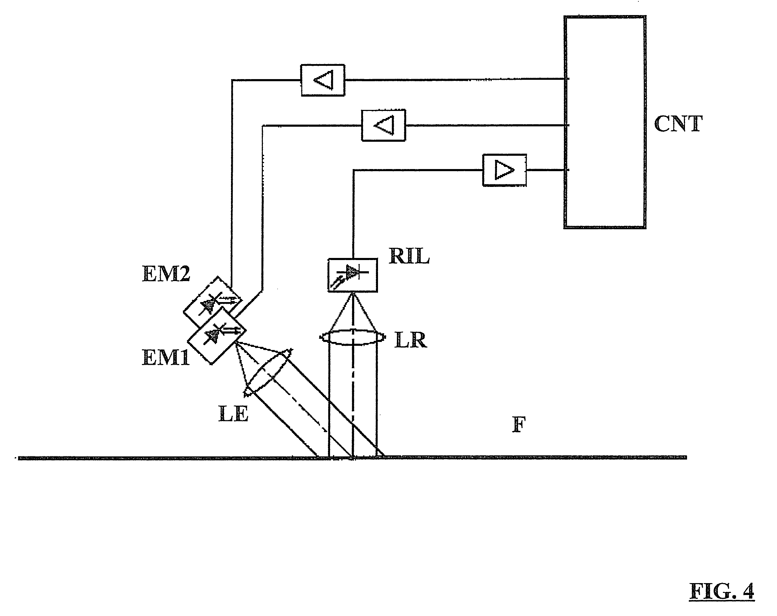

Figure 4 shows a diagram of an embodiment of the measurement system.

This has two emitters EM1, EM2 which emit at wavelengths of different value, $\lambda_1$ and $\lambda_2$ respectively, at a certain angle of incidence with respect to the normal to the plane of the film F, suitably controlled by respective amplification circuits. Emission can, if necessary, be focused by means of a system of lenses LE. A portion of the backscattered beam is detected by a detector RIL which detects the amount of the backscattered flow and, by means of an amplifier, supplies the signal detected to a control circuit CNT, which determines the sampling instants of the measurement in accordance with Figure 3. In a first time window $M_0$, CNT measures the ambient reference value, in a second window $M_1$, CNT measures the value scattered by means of the first emitter EM1, in a third window $M_2$, CNT measures the value scattered by the second emitter EM2. If necessary, the portion of the backscattered beam can be focused by means of a system of lenses LR placed in front of the detector RIL.

Discrimination of the two wavelengths is performed through sequential pulse emission and reception by means of solid state devices (EM1, EM2, RIL). This solution simplifies the system, as no moving parts are required, especially lamps, nor does it require the use of complex optical structures, such as prisms, filters, etc.. It is possible, for example, to use light emitting diodes (LED), which emit light at different wavelengths, or coherent light diodes (laser diodes).

Coherent and non-coherent emission sources can be used. The coherent emissions allow greater precision and repeatability of measurement.

The sources can be stabilized and the intensity of the light flow emitted can be controlled.

Embodiment of the amplifiers and of the focusing optics does not present a problem, as components available on the market can be used, using prior art design techniques to produce the system described hereinbefore.

A control circuit CNT implements the functionality of the measurement system.

In particular, CNT contains the database of the base parameters of the aforesaid learning phase; it controls emission and reception of the wavelengths $\lambda_1$ and $\lambda_2$, through the emitters EM1, EM2 and the detector RIL; it performs the measurement calculations according to the aforesaid formula.

Embodiment of the control circuit CNT is not a problem for those skilled in the art, on the basis of the functional description above, using devices available on the market.

A programmable logic device of the DSP (digital signal processor) type is preferably used for the embodiment of CNT, to allow high learning and calculation capacity, together with a high level of integration.

Variants of the non-limiting example described are possible, without however departing from the scope of protection of the present invention, comprising all equivalent embodiments for those skilled in the art.

Without departing from the principle of differential measurement, more than two separate sources can be used, at different wavelengths, adjacent or opposite, or a single source with emissivity switchable to the two or more separate wavelengths.

Moreover, measurement of the ambient emissivity can be repeated immediately before each measurement of the backscattered portion of the wavelengths. In this case, in reference to the formula which expresses the thickness Sp, the relative ambient emissivity value just measured is subtracted from each value which expresses the scattering at a specific wavelength.

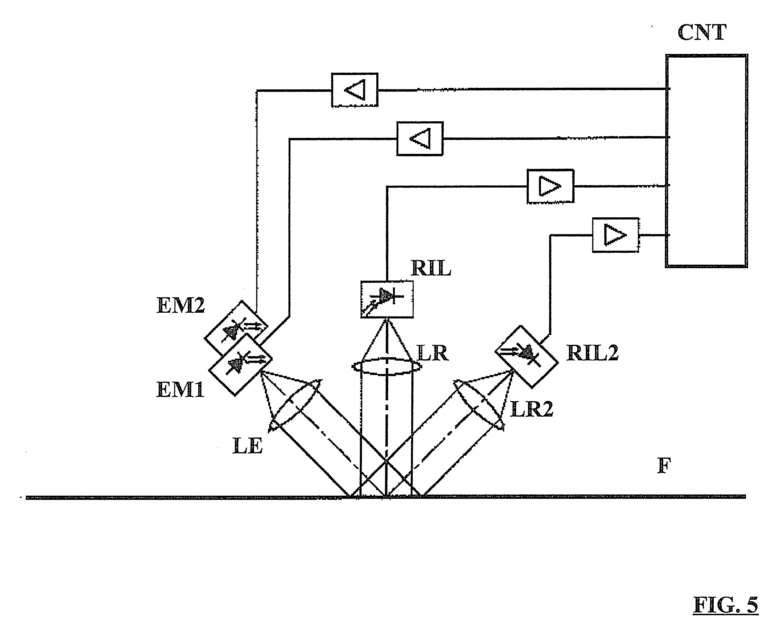

With reference to Figure 5, it is possible to use a second detector RIL2, placed opposite the emitters EM1, EM2 with respect to the perpendicular, capable of receiving reflected light. It can measure the amount of reflected light and determine a correction coefficient for the purpose of raising the precision of the base measurement.

Again with reference to Figure 5, it is possible to use the detector RIL2, to control the presence of the film F being measured by detecting the reflection, so that the absence of reflection indicates the absence of the film. This indication can be used to control the emission intensity of the emitters and reduce it for safety if the film is missing.

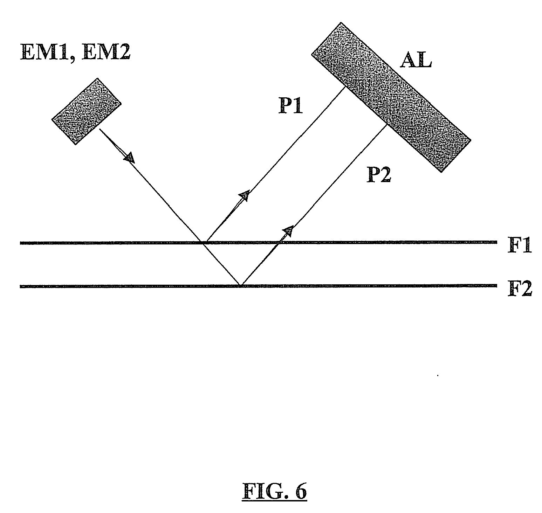

With reference to Figure 6, as second detector it is possible to use a linear array of detectors AL instead of a single element (RIL2 in Figure 5). In this way it is also possible to perform triangulation measurements to determine the distance of the film from the measurement system, allowing a correction coefficient to be determined in order to raise the precision of the base measurement and control the emission intensity as a function of the distance.

The linear array of detectors AL is placed opposite the emitters EM1, EM2 with respect to the perpendicular: the distance is determined on the basis of the position of the reflection peak on the array. The figure shows by way of example two positions of the film F1, F2 corresponding to which are two positions P1 and P2 of the reflection peak on the array.

The advantages deriving from application of the present invention are apparent.

A less expensive measurement system compared to prior art systems is obtained, which is easy to install, uses safe wavelengths without requiring the burden of the radiation controls instead required when using lower wavelengths in the ionizing radiation range.

From the description above those skilled in the art are able to produce the object of the invention without introducing further constructional details.

## Claims

1. Procedure for measuring the thickness of a thermoplastic film, **characterized in that** it comprises the steps of:

   detecting radiation backscattered by the plastic film;
   measuring said thickness on the basis of the value of said backscattered radiation measured.

2. Procedure as claimed in claim 1, **characterized in that** it comprises the step of illuminating said film with incident radiation, at a certain angle with respect to the normal to the film, in the visible and near infrared wavelength range.

3. Procedure as claimed in claim 1 or 2, **characterized in that** said measurement of the thickness is a differential measurement, and **in that** said incident radiation includes at least two radiations at different wavelength values, the backscattered radiation component of which is used for said differential measurement.

4. Procedure as claimed in claim 2, **characterized in that** wavelengths ranging from 0.4 to 1.6 $\mu$m are chosen in said visible and near infrared wavelength range.

5. Procedure as claimed in claim 3, **characterized in that** said differential measurement is a periodic measurement, and **in that** a mean value is determined by integration on a number of consecutive periodic measurements.

6. Procedure as claimed in claim 5, **characterized in that** said differential measurement comprises in sequence the steps of:

   - performing a first measurement $M_0$ of the ambient emissivity, used as relative zero;
   - emitting a light pulse by means of said incident radiation at a first wavelength ($\lambda_1$) and performing a second measurement ($M_1$) of the consequent portion backscattered from the film;
   - emitting a light pulse by means of said incident radiation at a second wavelength ($\lambda_2$) and performing a third measurement ($M_2$) of the consequent portion backscattered from the film;

7. Procedure as claimed in claim 6, **characterized in that** said differential measurement of the thickness (Sp) of the film is performed on the basis of the following formula:

$$Sp \ (\mu m) = [ \ ( M\lambda 1 - M\lambda 2 ) \ / \ ( M\lambda 1 \ / \ K_1 ) \ ] * K_2$$

where:

$M \lambda_1 = M_1 - Mo$ = scattering value at the first wavelength ($\lambda_1$) as difference between said second and first measurement;
$M \lambda_2 = M_2 - M_0$ = scattering value at the second wavelength ($\lambda_2$) as difference between said third and second measurement;
$K_1$ = scattering constant;
$K_2$ = conversion constant $mV \rightarrow \mu m$ between a voltage measurement and a dimensional measurement.

8. Procedure as claimed in claim 6 or 7, **characterized in that**, in the case of using further wavelengths, a light pulse is emitted and a relative measurement of the consequent portion backscattered from the film is performed for each of said further wavelengths.

9. Procedure as claimed in claim 6, 7 or 8, **characterized in that** said measurement of ambient emissivity is repeated immediately before each measurement of the backscattered portion of said wavelengths, and **in that**, to obtain said thickness (Sp), the relative ambient emissivity value just measured is subtracted from each value which expresses said portion backscattered at a specific wavelength.

10. Procedure as claimed in claim 3, **characterized in that** said at least two radiations at different wavelength values are of the coherent or non-coherent type.

11. Device for measuring the thickness of a thermoplastic film, **characterized in that** it comprises:

- means to detect a radiation backscattered by the plastic film;
- means to measure said thickness on the basis of the measured value of said backscattered radiation.

12. Device as claimed in claim 11, **characterized in that** it also comprises:

- means to illuminate said film with incident radiation, at a certain angle with respect to the normal to the film, in the visible and near infrared wavelength range.

13. Device as claimed in claim 12, **characterized in that** said measurement means perform a differential measurement, and **in that** said means to illuminate said film with incident radiation emit at least a first ($\lambda_1$) and a second ($\lambda_2$) wavelength of different value, the backscattered radiation component of which is used for said differential measurement.

14. Device as claimed in any one of claims 11, 12 or 13, **characterized in that** said means to illuminate said film with an incident radiation comprise at least a first and a second emitter (EM1, EM2) of said respectively at least a first ($\lambda_1$) and a second ($\lambda_2$) wavelength, which emit repeated pulse sequences repeated in reciprocal succession.

15. Device as claimed in claim 14, **characterized in that** said means to detect a backscattered radiation comprise a detector (RIL) of the backscattered portions of said at least a first ($\lambda_1$) and a second ($\lambda_2$) wavelength, and of an ambient emissivity.

16. Device as claimed in claim 15, **characterized in that** said means to measure said thickness comprise means (CNT) to:

- perform a first measurement ($M_0$) of said ambient emissivity;
- perform a second measurement ($M_1$) of said first wavelength ($\lambda_1$);
- perform a third measurement ($M_2$) of said second wavelength ($\lambda_2$);
- perform said differential measurement of the thickness (*Sp*) of the film on the basis of the following expression:

$$Sp\ (\mu m) = [\ (M \lambda_1 - M \lambda_2)\ /\ (M \lambda_1 / K_1)\ ]\ * K_2$$

where:

$M \lambda_1 = M_1 - M_0$ = scattering value at the first wavelength ($\lambda_1$) as difference between said second and first measurement;

$M \lambda_2 = M_2 - M_0$ = scattering value at the second wavelength ($\lambda_2$) as difference between said third and second measurement;

$K_1$ = scattering constant;

$K_2$ = conversion constant mV$\rightarrow\mu$m between a voltage measurement and a dimensional measurement.

**17.** Device as claimed in claim 14, 15 or 16, **characterized in that** said lighting means comprise further emitters of further wavelengths, and **in that** said detector (RIL) is also suitable to detect the backscattered portions of said further wavelengths.

**18.** Device as claimed in claim 15, 16 or 17, **characterized in that** said detector (RIL) repeats said ambient emissivity measurement immediately before each measurement of the backscattered portion of said wavelengths, and **in that**, to obtain said thickness (*Sp*), said measurement means subtract the relative ambient emissivity value just measured from each value which expresses said portion backscattered at a specific wavelength.

**19.** Device as claimed in claim 14 or 15, **characterized in that** it also comprises systems of lenses (LE, LR) to focus the emission of said at least a first and second emitter (EM1, EM2) and the detection of said detector (RIL).

**20.** Device as claimed in claim 13, **characterized in that** said at least two radiations at different wavelength values are of the coherent or non-coherent type.

**21.** Device as claimed in claim 14, **characterized in that** said at least a first and a second emitter (EM1, EM2) are separate sources, at different wavelengths, adjacent or opposite, or a single source with emissivity switchable to the two or more separate wavelengths.

**22.** Device as claimed in any one of claims 11 to 21, **characterized in that** it comprises second detection means (RIL2) of a reflected radiation, placed opposite said light means with respect to said normal, to determine the correction coefficient or to control the presence of the film being measured.

**23.** Device as claimed in claim 22, **characterized in that** said second detection means comprise a linear array of detectors (AL).

**24.** Device as claimed in claim 23, **characterized in that** said linear array of detectors (AL) allows triangulation measurements to be performed to determine the distance of the film from the measurement system.

FIG. 1

FIG. 2

FIG. 3

**FIG. 4**

FIG. 5

EM1, EM2

AL

P1

P2

F1

F2

FIG. 6

**European Patent Office**

## EUROPEAN SEARCH REPORT

Application Number

EP 05 10 6648

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2004/099807 A1 (SHELLEY PAUL H ET AL) 27 May 2004 (2004-05-27) * paragraphs [0018], [0019] * * abstract; claims 1-24; figures 1-4 * | 1-24 | G01B11/06 |
| X | US 3 693 025 A (DONALD C. BRUNTON) 19 September 1972 (1972-09-19) * column 2, line 57 - column 4, line 54 * * column 6, line 6 - line 27 * * abstract; claim 1; figure * | 1-24 | |
| X | DE 41 33 359 A1 (DR.ING.H.C. F. PORSCHE AG, 7000 STUTTGART, DE; DR.ING.H.C. F. PORSCHE) 15 April 1993 (1993-04-15) * column 2, line 15 - column 3, line 35 * * abstract; figures 1,2 * | 1-24 | |
| X | DE 100 26 282 A1 (INFRALYTIC GMBH) 6 December 2001 (2001-12-06) * the whole document * | 1-24 | |
| X | US 5 056 923 A (EBISAWA ET AL) 15 October 1991 (1991-10-15) * column 3, line 29 - column 5, line 53 * * abstract; figure 1 * | 1-24 | TECHNICAL FIELDS SEARCHED (Int.Cl.7) G01B |
| X | GB 2 181 835 A (UNIV LIVERPOOL; AR ENG LTD; THE * UNIVERSITY OF LIVERPOOL; * A R ENGIN) 29 April 1987 (1987-04-29) * page 3, line 25 - line 56 * * abstract; figure 2 * | 1-24 | |
| X | US 6 184 528 B1 (DIMARZIO DON ET AL) 6 February 2001 (2001-02-06) * column 3, line 23 - line 33 * * abstract; figure 1 * | 1-24 | |

-/--

The present search report has been drawn up for all claims

| Place of search | Date of completion of the search | Examiner |
|---|---|---|
| The Hague | 27 October 2005 | Passier, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**European Patent Office**

**EUROPEAN SEARCH REPORT**

Application Number

EP 05 10 6648

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 2004/061873 A1 (DAVIS BRETT L) 1 April 2004 (2004-04-01) * paragraph [0023] - paragraph [0030] * * abstract; figure 2 * ----- | 22-24 | |

TECHNICAL FIELDS SEARCHED (Int.Cl.7)

The present search report has been drawn up for all claims

| Place of search | Date of completion of the search | Examiner |
|---|---|---|
| The Hague | 27 October 2005 | Passier, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 619 466 A1**

## ANNEX TO THE EUROPEAN SEARCH REPORT
## ON EUROPEAN PATENT APPLICATION NO.

EP 05 10 6648

27-10-2005

| Patent document cited in search report | | Publication date | Patent family member(s) | | Publication date |
|---|---|---|---|---|---|
| US 2004099807 | A1 | 27-05-2004 | AU | 2003294505 A1 | 18-06-2004 |
| | | | WO | 2004048888 A2 | 10-06-2004 |
| US 3693025 | A | 19-09-1972 | DE | 2055708 A1 | 03-06-1971 |
| | | | GB | 1367636 A | 18-09-1974 |
| | | | JP | 51001135 B | 14-01-1976 |
| DE 4133359 | A1 | 15-04-1993 | NONE | | |
| DE 10026282 | A1 | 06-12-2001 | AU | 7407501 A | 11-12-2001 |
| | | | WO | 0192820 A1 | 06-12-2001 |
| | | | EP | 1287310 A1 | 05-03-2003 |
| US 5056923 | A | 15-10-1991 | JP | 2010206 A | 16-01-1990 |
| | | | JP | 2061093 C | 10-06-1996 |
| | | | JP | 7081840 B | 06-09-1995 |
| GB 2181835 | A | 29-04-1987 | NONE | | |
| US 6184528 | B1 | 06-02-2001 | AU | 3780099 A | 21-03-2000 |
| | | | WO | 0012980 A1 | 09-03-2000 |
| US 2004061873 | A1 | 01-04-2004 | NONE | | |